# EUROPEAN PATENT SPECIFICATION

(11) **EP 3 865 355 B1**
(45) Date of publication and mention of the grant of the patent: **09.04.2025**
(21) Application number: 20157368.0
(22) Date of filing: 14.02.2020
(51) Int. Cl.: B60S 13/00, B60P 3/06

(54) **TRANSPORTATION ARRANGEMENT FOR TRANSPORTATION OF AN OBJECT ON A SURFACE**
TRANSPORTANORDNUNG ZUM TRANSPORT EINES OBJEKTS AUF EINER OBERFLÄCHE
AGENCEMENT DE TRANSPORT D'UN OBJET SUR UNE SURFACE

(43) Date of publication of application: 18.08.2021
(73) Proprietor: Wheel.me AS, 0277 Oslo (NO)
(72) Inventor: Libakken, Rolf, N-2034 HOLTER (NO); Henriksen, Dan, N-9990 BÅTSFJORD (NO)
(74) Representative: Onsagers AS

(56) References cited:
- WO-A1-2019/191899
- CN-A- 104 692 293
- CN-A- 107 444 362
- CN-U- 205 296 954
- DE-A1- 102016 224 098
- FR-A1- 3 036 349
- US-A1- 2012 034 059
- US-A1- 2017 341 465

## Description

### Introduction

The present invention relates to a remotely controlled transportation arrangement for transportation of an object on a surface. The invention further relates to a method and system which can be attached to a vehicle for moving the vehicle along a surface.

### Background

There are several instances where there is a need of moving vehicles, such as cars/automobiles, without engaging the vehicle's own propulsion engine. Examples of such situations are during manufacturing of the vehicles, while arranging the vehicles for transportation to retailer or customers, in parking garages, etc.

During manufacturing of cars today, the cars are transported by use of conveyor belts or driven manually by an operator between stations and from completion of the car to the road/rail transport such as trailer, train, boat, etc. Conveyor belts have only one direction of movement and is suitable for transportation along a straight path and is commonly used between manufacturing stations. When the car is approaching the final stages of assembly, the weight and size prohibits easily movement. The need to use the vehicle's own engine, leads in case of fluid fuel vehicles to fire risk due to the presence of fuel.

CN104692293A describes an automatic forklift device that is provided with forklift chassis, two sets of wheels, a battery compartment and the device can be employed for unmanned lifting of objects.

US 2012/034059 describes an article handling apparatus for gripping and moving an article such as a large tire or other vehicular component of a vehicle.

CN107444362 describes a car moving device which comprises a lifting mechanism, a travelling mechanism, a steering mechanism, an electrical control unit and a handheld-type wireless control box.

Similar needs for transportation are present for other objects as well, and it should be noted that the present invention can be used for transportation of a number of objects where a vehicle or a wheel of a vehicle is only one example.

The object of the invention is to provide a transportation arrangement for versatile transportation of an object on a surface. In the following description, a vehicle is often described as being the object, but as mentioned above, the transportation arrangement can be adapted to a number of different objects. Versatile transportation involves the ability to transport the vehicle in any direction without constraints such as being confined to the direction of a conveyor belt or the vehicles own maneuver ability, and the ability to position the vehicle in a precise manner. An object of the invention is also to provide a vehicle transportation arrangement which enables transportation of a vehicle without engaging the vehicle's internal propulsion engine.

The object of the invention is achieved by means of the features of the patent claims.

### Short description

A transportation arrangement for transportation of an object on a surface comprises at least one transportation unit. The transportation unit comprises a housing comprising a vertical front surface, two arms movably connected to the housing at each side of the vertical front surface, at least one rolling element arranged at a lower portion of the housing, and a power source connected to the rolling elements and the movable arms, where the rolling element are configured to roll in any horizontal direction on the surface.

In one embodiment the rolling elements are four sets of Mecanum wheels. The rolling elements are arranged at the arms.

A screw jack may be provided and be connected to the arms for moving the arms.

In one embodiment, each of the arms comprise support sections adapted to receive the object. The arms are arranged in a horizontal position parallel to each other, and can be adapted to be moved horizontally towards each other. When the arms are moved towards each other, the object placed on the arms will raise.

The arms may also or alternatively be adapted to be moved vertically.

### Detailed description

The invention will now be described in more detail and by reference to the accompanying figures.
Figure 1 illustrates a front view of an embodiment of a transportation unit for use in a vehicle transportation arrangement.
Figure 2 illustrates a rear view of an embodiment of a transportation unit for use in a vehicle transportation arrangement.
Figure 3 illustrates the lifting of a wheel by movement of the arms of a transportation unit.

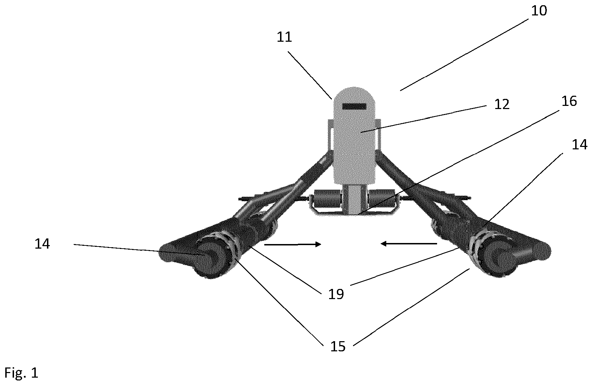

Figure 1 illustrates an embodiment of a transportation unit 10. The transportation unit 10 can be a part of a vehicle transportation arrangement for transportation of an object such as a vehicle on a surface alone or combined with other transportation units. The transportation unit may also be used alone or in combination with other transportation units to transport other objects.

The transportation unit 10 comprises a housing 11 comprising a vertical front surface 12, two arms 14 movably connected to the housing 10 at each side of the vertical front surface, at least one rolling element 15 arranged at the arms, and a power source connected to the rolling elements and the movable arms.

In the housing 11, there are arranged at least one sensor device, comprising sensors such as Lidar and/or camera. The sensors can measure the distance between the transportation unit and surrounding objects, can measure and monitor the distance to nearby objects and obstacles and are used for navigating to the desired position. The sensors can also be used to position the transportation unit in coordination/combination with other transportation units of similar or other type.

The housing 11 may also comprise other sensors. Such sensors may for example be ultrasound sensors or other distance sensors, further cameras etc. For example, can front and rear sensors be cameras and side sensors be ultrasound sensors.

The rolling elements 15 is in this embodiment Mecanum wheels, which are omnidirectional wheels. The Mecanum wheels are arranged in four sets arranged on the arms 14 with two sets of wheels on each arm.

The wheels may in other embodiments be arranged in other locations, for example by providing wheel support bars arranged in parallel and parallel to the surface, or directly connected to the housing 11.

In other embodiments, there may be other types of rolling elements, but the purpose of the rolling elements is to enable movement on the surface, for example a floor. In some embodiments, the rolling elements can be rotated in order to enable rolling in any horizontal direction on the surface, similar to the capabilities of the Mecanum omnidirectional wheels. In this way the transportation unit 10 is very versatile and can navigate precisely from one position to another and position itself precisely with respect to other objects, walls or other obstacles. The rolling elements are connected to a driving unit such as a motor which in turn may be connected to a control unit which controls the driving unit and thereby the rolling elements.

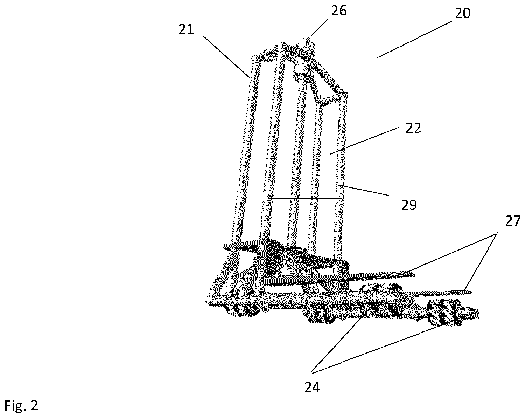

The arms 14 are designed to lift and hold the object to be transported. The sections 19 of the arms are support sections, ie. the sections on the arms onto which the object will be supported when the arms are positioned for lifting and/or movement of the object. In the embodiment of figure 1 and 2, the arms 14 and 24 are designed to lift a wheel for a car, but can also be used to lift other objects as discussed above. The arms 14 are in these embodiments shaped as longitudinal elements with a circular cross section, but other shapes can be used, for example triangular, oval, etc. The arms 14, 24 are in the embodiments of figure 1 and 2 arranged parallel to the surface, ready to be brought in position under the object to support the object for transportation.

The power source is for example a removable or integrated battery. The battery may be chargeable by connecting to a charging station by means of cable or by wireless charging using induction.

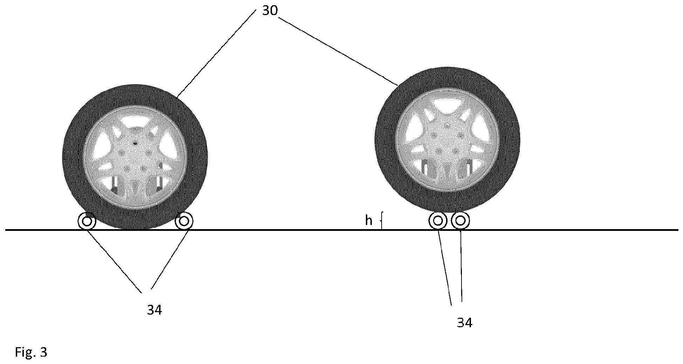

The transportation arrangement comprises means for moving the arms. This may be a screw jack connected to the arms for moving the arms. The arms are arranged in a horizontal position parallel to each other when positioned under the object and are adapted to be moved horizontally towards each other. As the arms move horizontally towards each other, any round object will move upwards, thus providing the lift. This is illustrated in figure 3, where the movement of the arms 34 towards each other leads to the elevation h of the wheel 30.

To aid this purpose, the arms 14 in figure 1 may comprise rolling support elements. The rolling support elements are located in the support section 19 of the arms dedicated to support the object and are adapted to roll when the arms 14 are moved towards each other. As the arms move towards each other, the supporting elements arranged in the support sections 19 will move under the object and this movement is facilitated by the rolling supporting elements. In this way any disruptive motion due to friction between the arms and the object can be avoided.

After being moved towards each other, the arms 14, 24 may be moved vertically to lift the object higher up from the surface. In some embodiments the arms are lifted vertically before being moved inwards, or they may only be lifted vertically.

In some embodiments, the arms 14 may be positioned along each side of the housing 11, parallel to the sides, ie. arranged vertically, in a resting position. When preparing to lift the object to be transported, the arms will be lowered until they are parallel to the surface by rotation. The arms are in one embodiment rotated in a direction parallel to the front surface but can in some embodiments be rotated perpendicular to the front surface. In the case where the arms are rotated parallel to the front surface, they can subsequently be rotated inwards, ie. towards each other to a defined transportation position. In the example of lifting a wheel, the arms are rotated until they are parallel to each other and perpendicular to the front surface. In one embodiment, the arms comprise a sensor which can detect when the arms meet resistance in order to stop the movement at contact. The arms will thus provide a support for the wheel or other object.

The transportation arrangement may comprise at least one locking device configured to lock the arm(s) in a predetermined position.

The embodiment in figure 2 is similar to the embodiment in figure 1, but comprises a second set of arms 27. The arms 27 can be an alternative to the arms of the embodiment of figure 1 or an addition. The arms 27 are arranged in parallel to the surface and in parallel to each other and are adapted to be lifted vertically, thus lifting the object. This embodiment is particularly suited for lifting rigid objects such as boxes but can be used for lifting any kind of object. The arms are also in this embodiment connected to a screw jack 26 which when rotated causes the lifting of the arms. In the embodiment of figure 2, the housing 21 is open and the vertical front surface 22 is defined by the front side rods 29 and the front upper rod 28.

When in use, the transportation unit will move to the object by means of the rolling elements and into a position where the arms are located below and/or at least partly under the object. In some embodiments, the transportation unit will move into a position where the vertical front surface of the housing is in contact with a surface of the object. When the object is a wheel, the front surface of the wheel will contact the vertical front surface of the housing, ensuring a stable lifting and moving position. The arms will then move as discussed above to lift the object, and the transportation unit can move by means of the rolling elements to a desired position on the surface.

As mentioned briefly above, the transportation arrangement may comprise several transportation units which can be moved in coordination with each other. In the case where a vehicle having four wheels, such as a car, is to be transported, there may be provided four transportation units, where the transportation units are configured to lift and move each wheel of a car. Each of the transportation unit may thus comprise communication means and comprise means for and be configured to send and receive signals to and from the other transportation units.

## Claims

1. Transportation arrangement for transportation of an object on a surface, the transportation arrangement comprising at least one transportation unit (10) comprising
- a housing (11) comprising a vertical front surface, two arms movably connected to the housing at each side of the vertical front surface, rolling elements (15) arranged at the arms (14), where the rolling elements are configured to roll in any horizontal direction on the surface, where the arms are shaped as longitudinal elements with a circular cross section, the transportation arrangement being **characterised in that** it further comprises:
- a power source connected to the rolling elements and the movable arms; and
- at least one sensor device configured to measure the distance between the transportation unit and surrounding objects.

2. Transportation arrangement according to claim 1, where the rolling elements are four sets of Mecanum wheels.

3. Transportation arrangement according to any of the previous claims, comprising a screw jack connected to the arms for moving the arms.

4. Transportation arrangement according to any of the previous claims, where each of the arms comprise support sections adapted to receive the object.

5. Transportation arrangement according to any of the previous claims, where the arms are arranged in a horizontal position parallel to each other, and are adapted to be moved horizontally towards each other.

6. Transportation arrangement according to any of the previous claims, where the arms are arranged in a horizontal position parallel to each other, and are adapted to be moved vertically.

7. Transportation arrangement according to any of the previous claims, comprising a second pair of arms (27).

8. Transportation arrangement according to any of the previous claims, comprising at least one locking device configured to lock the arms in a predetermined position.

9. Transportation arrangement according to any of the previous claims, where the power source is a removable battery.

10. Transportation arrangement according to any of the previous claims, comprising four transportation units, the transportation units being configured to lift and move each wheel of a car

11. Transportation arrangement according to claim 11, where the four transportation units each comprises communication means and is configured to send and receive signals to and from the other transportation units.

## Patentansprüche

1. Transportanordnung zur Beförderung eines Objekts auf einer Oberfläche, wobei die Transportanordnung mindestens eine Transporteinheit (10) umfasst, die folgendes aufweist:
- ein Gehäuse (11) mit einer vertikalen Vorderfläche, zwei Armen, die beweglich mit dem Gehäuse an jeder Seite der vertikalen Vorderfläche verbunden sind, Rollelementen (15), die an den Armen (14) angeordnet sind, wobei die Rollelemente so konfiguriert sind, dass sie sich in jede horizontale Richtung auf der Oberfläche bewegen können, wobei die Arme als längliche Elemente mit einem kreisförmigen Querschnitt ausgebildet sind,
wobei die Transportanordnung **dadurch gekennzeichnet ist, dass** sie ferner aufweist:
- eine Energiequelle, die mit den Rollelementen und den beweglichen Armen verbunden ist, und
- mindestens eine Sensoreinrichtung, die dazu konfiguriert ist, den Abstand zwischen der Transporteinheit und umgebenden Objekten zu messen.

2. Transportanordnung nach Anspruch 1, wobei die Rollelemente vier Sätze von Mecanum-Rädern sind.

3. Transportanordnung nach einem der vorhergehenden Ansprüche, umfassend eine Spindelhubvorrichtung, die mit den Armen verbunden ist, um die Arme zu bewegen.

4. Transportanordnung nach einem der vorhergehenden Ansprüche, wobei jeder der Arme Stützabschnitte umfasst, die zur Aufnahme des Objekts ausgelegt sind.

5. Transportanordnung nach einem der vorhergehenden Ansprüche, wobei die Arme in einer horizontalen Position parallel zueinander angeordnet sind und so ausgelegt sind, dass sie sich horizontal aufeinander zu bewegen lassen.

6. Transportanordnung nach einem der vorhergehenden Ansprüche, wobei die Arme in einer horizontalen Position parallel zueinander angeordnet sind und so ausgelegt sind, dass sie sich vertikal bewegen lassen.

7. Transportanordnung nach einem der vorhergehenden Ansprüche, aufweisend ein zweites Paar von Armen (27).

8. Transportanordnung nach einem der vorhergehenden Ansprüche, aufweisend mindestens eine Verriegelungsvorrichtung, die dazu konfiguriert ist, die Arme in einer vorbestimmten Position zu verriegeln.

9. Transportanordnung nach einem der vorhergehenden Ansprüche, wobei die Energiequelle eine austauschbare Batterie ist.

10. Transportanordnung nach einem der vorhergehenden Ansprüche, aufweisend vier Transporteinheiten, wobei die Transporteinheiten so konfiguriert sind, dass sie jeweils ein Rad eines Fahrzeugs anheben und bewegen.

11. Transportanordnung nach Anspruch 10, wobei jede der vier Transporteinheiten jeweils Kommunikationsmittel aufweist und konfiguriert ist, um Signale an die anderen Transporteinheiten zu senden und von diesen empfangen zu können.

## Revendications

1. Dispositif de transport pour le transport d'un objet sur une surface, le dispositif de transport comprenant au moins une unité de transport (10) comprenant
- un boîtier (11) comprenant une surface avant verticale, deux bras reliés de manière mobile au boîtier de chaque côté de la surface avant verticale, des éléments roulants (15), dans lequel les éléments roulants sont configurés pour rouler dans n'importe quelle direction horizontale sur la surface, dans lequel les bras sont façonnés comme des éléments longitudinaux avec une coupe transversale circulaire, le dispositif de transport étant **caractérisé en ce qu'**il comprend en outre :
- une source d'énergie reliée aux éléments roulants et aux bras mobiles; et
- au moins un dispositif de capteur configuré pour mesurer la distance entre l'unité de transport et les objets environnants.

2. Dispositif de transport selon la revendication 1, dans lequel les éléments roulants sont quatre jeux de roues Mecanum.

3. Dispositif de transport selon l'une quelconque des revendications précédentes, comprenant un vérin à vis relié aux bras pour déplacer les bras.

4. Dispositif de transport selon l'une quelconque des revendications précédentes, dans lequel chacun des bras comprend des sections de support adaptées pour recevoir l'objet.

5. Dispositif de transport selon l'une quelconque des revendications précédentes, dans lequel les bras sont disposés dans une position horizontale parallèlement les uns aux autres, et sont adaptés pour être déplacés horizontalement les uns vers les autres.

6. Dispositif de transport selon l'une quelconque des revendications précédentes, dans lequel les bras sont disposés dans une position horizontale parallèlement les uns aux autres, et sont adaptés pour être déplacés verticalement.

7. Dispositif de transport selon l'une quelconque des revendications précédentes, comprenant une seconde paire de bras (27).

8. Dispositif de transport selon l'une quelconque des revendications précédentes, comprenant au moins un dispositif de verrouillage configuré pour verrouiller les bras dans une position prédéterminée.

9. Dispositif de transport selon l'une quelconque des revendications précédentes, dans lequel la source d'énergie est une batterie amovible.

10. Dispositif de transport selon l'une quelconque des revendications précédentes, comprenant quatre unités de transport, les unités de transport étant configurées pour soulever et déplacer chaque roue d'une voiture.

11. Dispositif de transport selon la revendication 10, dans lequel les quatre unités de transport comprennent chacune des moyens de communication et sont configurées pour envoyer et recevoir des signaux vers et depuis les autres unités de transport.
